# EUROPEAN PATENT APPLICATION

(11) **EP 1 894 706 A1**
(43) Date of publication of application: **05.03.2008**
(21) Application number: 07405166.5
(22) Date of filing: 11.06.2007
(51) Int. Cl.: B29C 70/52, B29C 70/50

(54) **Method for continuously preforming composite material in uncured state**

(30) Priority: 29.08.2006 JP 2006231531
(71) Applicant: JAMCO CORPORATION, Mitaka, Tokyo (JP)
(72) Inventor: Aijima, Masatoshi, Tokyo (JP)
(74) Representative: Moinas, Michel

(57) **Abstract**

The invention provides a method for preforming a prepreg material impregnated with thermosetting resin continuously in an uncured state. Sheets of prepreg material are pulled out from rollers and laminated, which is then bent to a predetermined cross-sectional shape in a bending device. The prepreg material is formed into a long product continuously in a mold having a heater. The temperature and pressure applied to the prepreg material in the mold is selected so that the heating temperature is either room temperature or a heating temperature low enough to prevent the thermosetting resin from complete curing, and so that the pressure is within a pressure range enabling the prepreg material to maintain its molded state.

## Description

### BACKGROUND OF THE INVENTION

### Field of the invention

The present invention relates to a method for continuously preforming in an uncured state a prepreg composite material formed by impregnating carbon fiber and the like with thermosetting resin.

### Description of the related art

The art of continuously forming a prepreg material is disclosed for example in Japanese Patent Application Laid-Open Publication No. 2001-191418 (patent document 1). Further, the art of utilizing a fiber reinforced composite material in a partially cured state is disclosed in Japanese Patent Application Laid-Open Publication Nos. 2001-293790, 2001-310798, 2001-315149 and 2000-15710 (patent documents 2 through 5).

The arts disclosed in patent documents 2 through 5 teach using a partially-cured composite material, but they do not teach methods for manufacturing a product efficiently by continuously molding such material.

### SUMMARY OF THE INVENTION

The present invention analyzes the relationship between the heating temperature and curing progress of the prepreg material through various experiments in order to provide a method for manufacturing an uncured composite material continuously.

The present invention provides a method for continuously preforming a prepreg composite material into a straight long product in an uncured state, the method comprising: a step for sending out a prepreg material from rolls; a step for laminating the prepreg material sent out from the rolls and bending the same to have a predetermined cross-sectional shape; a step for preforming the bent prepreg material in a mold having a heater; and a traction step for pulling out the preformed prepreg material from the mold, wherein the step for preforming the material in a mold is performed so that the thermosetting resin impregnated in the prepreg material does not gelate, the step being performed under a processing condition in which a temperature and a pressure are determined so that the prepreg material maintains its molded shape, and in a post-process, the preformed composite material is deformed into a three-dimensional shape corresponding to a counterpart member and completely cured to form a reinforcement member for the counterpart member.

In addition, the prepreg material is sent either intermittently to the mold or continuously to the mold.

According to the present invention, it becomes possible to preform a prepreg composite material continuously in an uncured state, so that by completely hardening the preformed composite material after deforming the same into a three-dimensional shape corresponding to a counterpart member in a post-process, it becomes possible to utilize the composite material as a reinforcement member or the like.

### BRIEF DESCRIPTION OF THE DRAWINGS

FIG. 1 is an explanatory view illustrating an application example of the present invention;
FIG. 2 is an explanatory view showing an example of an uncured stringer;
FIG. 3 is an explanatory view showing an example of a completely cured stringer;
FIG. 4 is an explanatory view showing a stringer material having a hat-section;
FIG. 5 is an explanatory view showing a stringer with a hat-shaped cross-section which is completely cured in advance;
FIG. 6 is an explanatory view showing one example of a molding device for continuously molding a prepreg composite material in an uncured state;
FIG. 7 is an explanatory view showing a cross-sectional structure of the prepreg material;
FIG. 8 is an explanatory view showing the state of bending the prepreg material;
FIG. 9 is an explanatory view showing the structure of a mold of a press device;
FIG. 10 is a timing chart of a continuous molding device;
FIG. 11 is an explanatory view showing another example of a molding device for continuously molding a prepreg composite material in an uncured state;
FIG. 12 is an explanatory view showing the structure of pressure rollers;
FIG. 13 is an explanatory view showing the relationship between time and temperature for gelation of the prepreg material;
FIG. 14 is an explanatory view showing a temperature - viscosity curve of the prepreg;
FIG. 15 is an explanatory view of an uncured mold product; and
FIG. 16 is an explanatory view showing the steps for manufacturing a completely cured product.

### DETAILED DESCRIPTION OF THE PREFERRED EMBODIMENTS

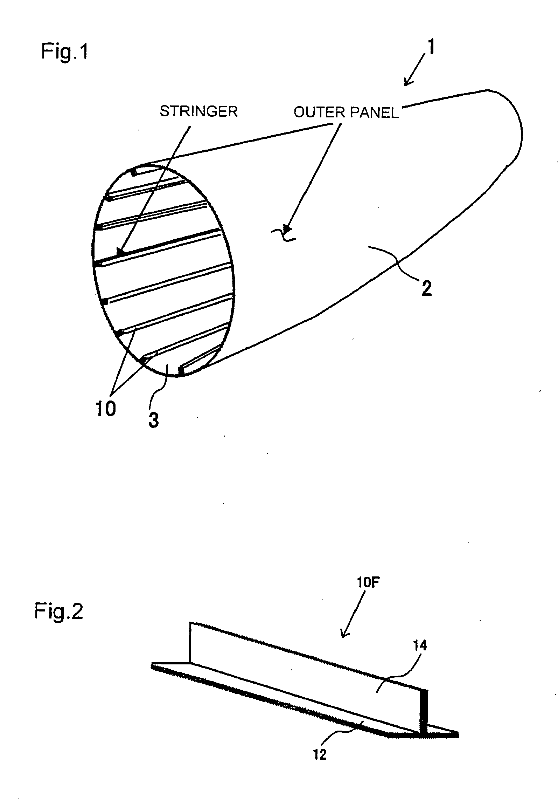

FIG. 1 is an explanatory view showing the application example of the present invention.

A body 1 of an aircraft acquires the required strength by bonding stringers 10 functioning as reinforcement members on an inner surface 3 of an outer panel 2. Since the inner surface 3 of the outer panel 2 is formed as a three-dimensional curved surface, the stringers 10 must also be formed to have shapes corresponding to the curved surface.

FIG. 2 shows a case in which an uncured material 10F formed of a composite material having flexibility is used as the material for forming the stringer having a T-shaped cross-section composed of a skin 12 and a rib 14. When the uncured material 10F of the composite material manufactured by a continuous molding device described later is cut into a predetermined length and pressed onto the inner surface 3 of the outer panel 2, the uncured material 10F deforms to correspond to the curved surface of the inner surface 3. In this state, the uncured material 10F is heated and pressed using a heating and pressing device such as an autoclave and completely cured.

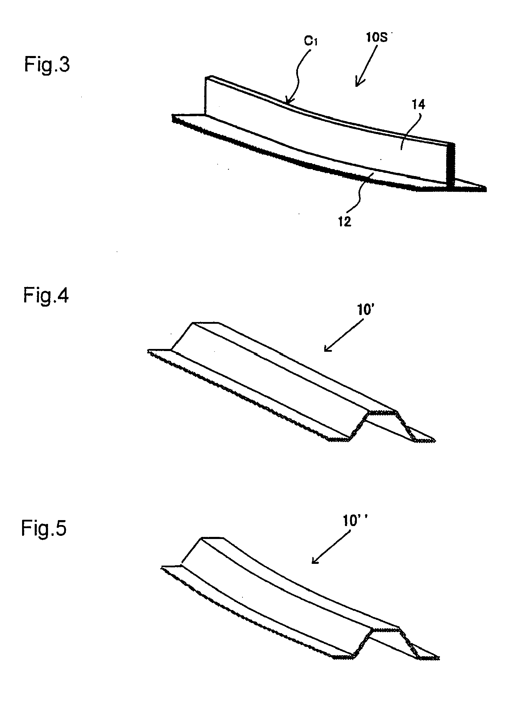

FIG. 3 illustrates a stringer being completely cured in advance.

An uncured material manufactured via a continuous molding device is cut into a predetermined length and mounted on a mold having a shape corresponding to the shape of the inner side of the body 2, which is then heated and pressed to manufacture a completely cured material 10S.

This completely cured material 10S has a T-shaped cross-section composed of a skin 12 and a rib 14, and has a curvature C₁ corresponding to the curvature of the inner surface 3 of the body to which the material is to be bonded. The completely cured material 10S is bonded to the inner surface 3 via an appropriate bonding means to manufacture the body.

FIG. 4 illustrates a stringer material having a hat-section, which is one example of the shape of an uncured material 10' to be manufactured.

FIG. 5 shows an example of a stringer having a hat-section being completely cured in advance. For example, a stringer 10" having such shape can also be manufactured.

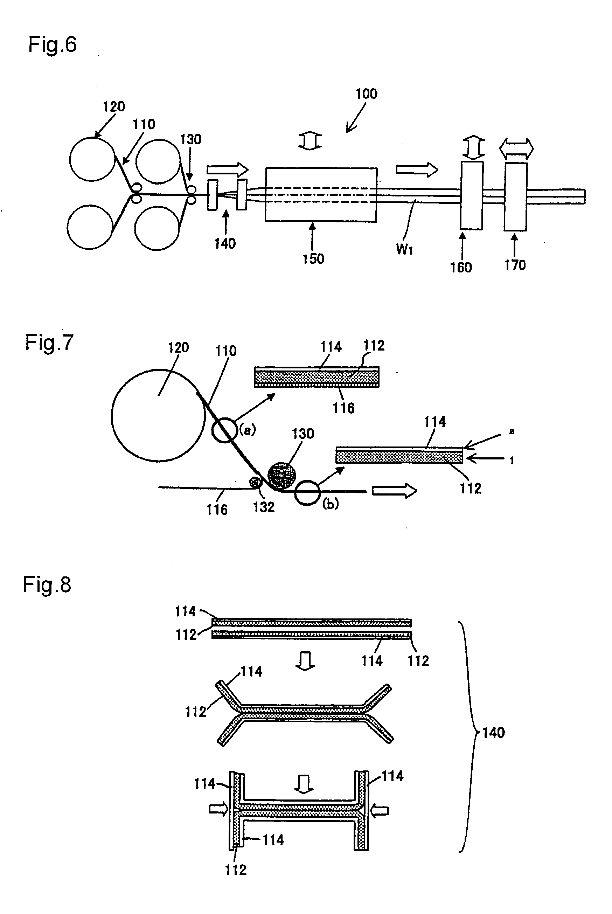

FIG. 6 illustrates one example of a device for continuously molding an uncured material of a prepreg composite material in an intermittent manner.

A continuous molding device 100 comprises rolls 120 for feeding a prepreg material 110, guide rollers 130 and a bending device 140.

FIG. 7 shows a cross-sectional structure of the prepreg material 110 being fed, wherein a prepreg sheet 112 is sandwiched between a carrier film 114 and a separator film 116 when being fed from the roll 120. The separator film 116 is removed when the prepreg sheet passes rollers 130 and 132, and thereafter, a laminated body composed of the prepreg sheet 112 and the carrier film 114 is sent to the bending device 140.

FIG. 8 shows a state in which the laminated prepreg material is bent into an H-shape while passing through the bending device 140.

As illustrated in FIG. 6, a press device 150 is disposed on the downstream side of the bending device 140. Further downstream from the press device 150 are disposed a fixed clamp device 160 and a traction clamp device 170.

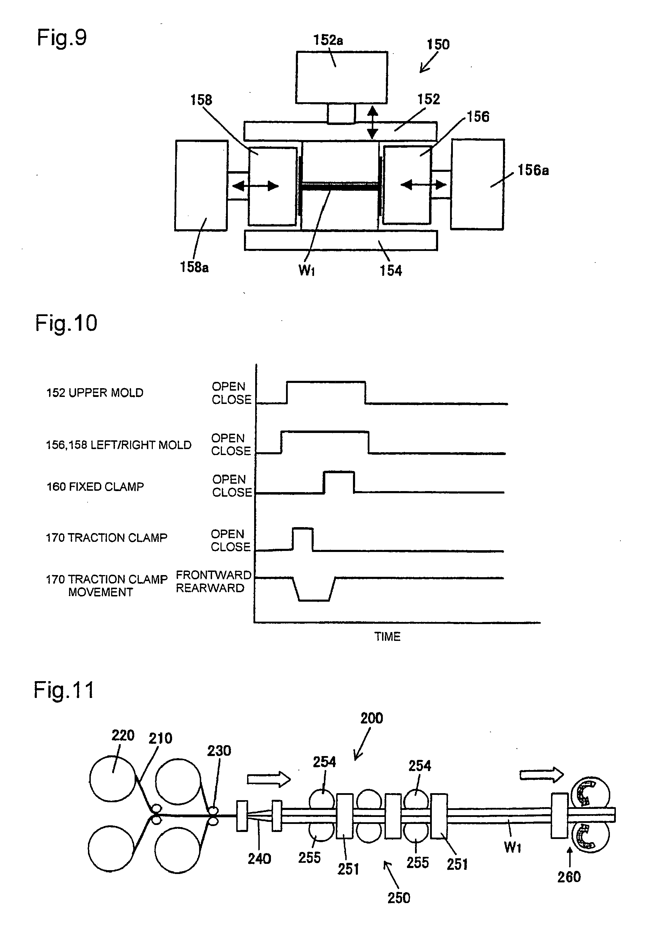

FIG. 9 is an explanatory view showing the structure of a mold of the press device 150.

An upper mold 152 is arranged to oppose to a fixed lower mold 154, and the upper mold 152 is driven to move up and down via an actuator 152a.

Left and right molds 156 and 158 are also driven via actuators 156a and 158a to move sideways, pressing the prepreg laminated body W₁ into an H shape.

Each mold is provided with an internal heater, by which the mold can be heated to a predetermined temperature.

The fixed clamp device 160 and the traction clamp device 170 cooperate to pull out the belt-like prepreg laminated body W₁ from the press device 150 intermittently at the right timing.

FIG. 10 is a timing chart showing the operation of the continuous molding device 100.

In the chart, the horizontal axis represents time and the vertical axis represents the opening and closing or movement of the molds and clamps. According to this operation, the uncured mold product W₁ is molded intermittently and continuously into a long product having a predetermined cross-sectional shape. According to this operation, for example, a molding speed of approximately 0.5 meters per minute is achieved.

FIG. 11 shows another example of a device for continuously molding an uncured material from a prepreg composite material.

A continuous molding device 200 comprises rolls 220 for feeding a prepreg material 210, guide rollers 230 and a bending device 240. These devices are equivalent to those described in the aforementioned embodiment.

The prepreg material bent by the bending device 240 is sent to a pressure roller device 250.

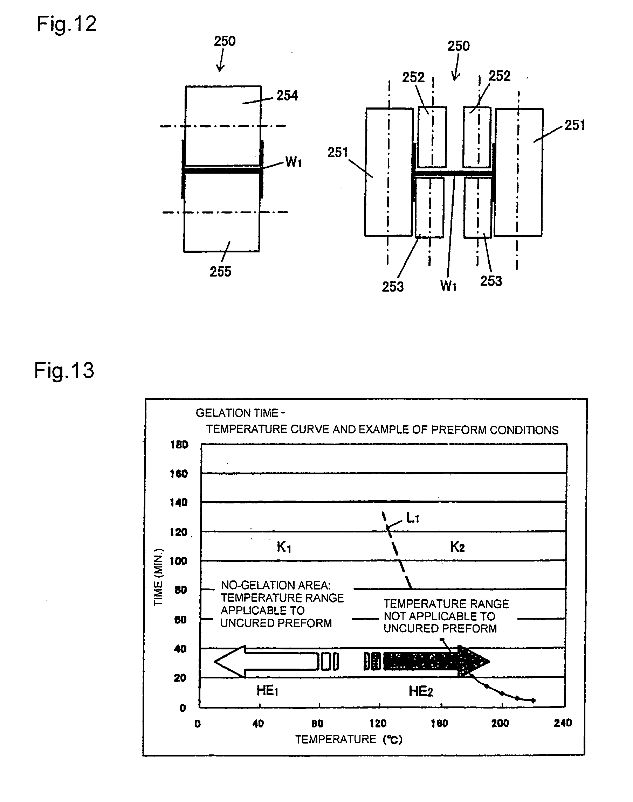

FIG. 12 illustrates the structure of a pressure roller, which is composed of rollers 251, 252 and 253 for pressing both side walls of the H-shaped product W₁, and rollers 254 and 255 for pressing the flange portion connecting the both side walls.

Each roller is provided with an internal heater, by which the rollers can provide necessary heat to the prepreg material.

The uncured mold product W₁ is continuously pulled out via a traction roller device 260. The pull-out speed is set for example to approximately 2 meters per minute.

FIG. 13 is a chart showing the relationship between time and temperature required for the gelation of the prepreg material.

With the horizontal axis representing temperature and the vertical axis representing the heating time, the temperature - gelation property of a prepreg material setting at 180 °C is shown by line L₁. Gelation starts and thermosetting progresses in the area K₂ on the right side of the line.

In other words, the progress of thermosetting is determined by the relationship between heating temperature and heating time .

In the temperature range shown by reference HE₂, if the temperature is returned to ordinary temperature after heating the material for a short time, the material is not completely cured but has a considerable degree of hardness, making it difficult to perform unrestricted deformation.

In the temperature range HE₁ including room temperature, the thermosetting resin impregnated in the prepreg material will not gelate, and the prepreg material maintains its shape molded in the mold.

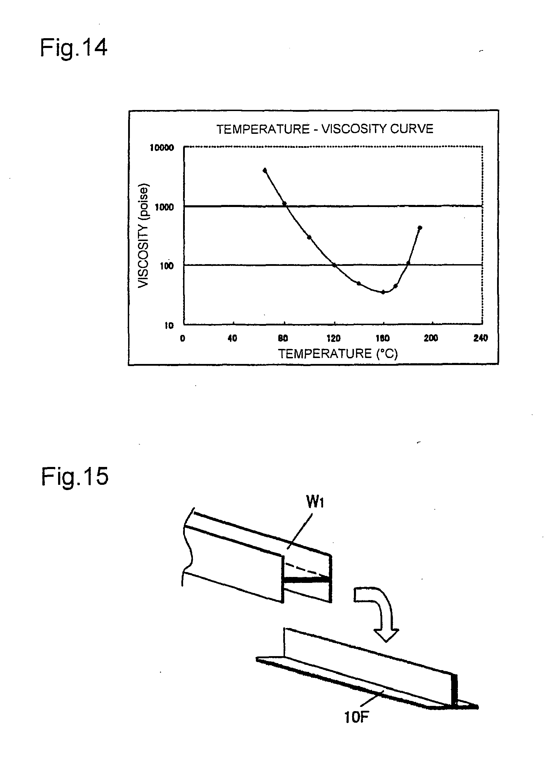

FIG. 14 is a temperature - viscosity curve of the prepreg. Since the viscosity of the resin varies with temperature, it becomes possible to select the property of the prepreg subsequent to the preforming process based on the mold temperature. If the temperature is at room temperature or a low temperature close to room temperature, the viscosity becomes high and the degree of adhesion between the prepregs is low, according to which bubbles between layers or within layers cannot be removed. Since the viscosity is lowered as the mold temperature is increased, the degree of adhesion is increased, by which the layers of the prepreg become integrated and a considerable degree of bubbles is expected to be removed.

Since the uncured preform product is heated and pressed during the post-process of complete curing process, according to which the viscosity of the resin is lowered temporarily before being cured, the bubbles can be removed effectively.

The present invention focuses on the above-described property, and provides a method for continuously preforming a product from a prepreg material.

FIG. 15 shows an uncured mold product W₁ manufactured by the above-mentioned device. Since the product has an H-shaped cross-section, the product can be cut into half to obtain two T-section uncured materials 10F.

Since this uncured material 10F has flexibility, for example, it can be completely cured by bonding to the inner surface 3 of the outer panel 2 of the body 1 of the aircraft illustrated in FIG. 1 and applying predetermined heat and pressure thereto, according to which the material can exert the function of a stringer.

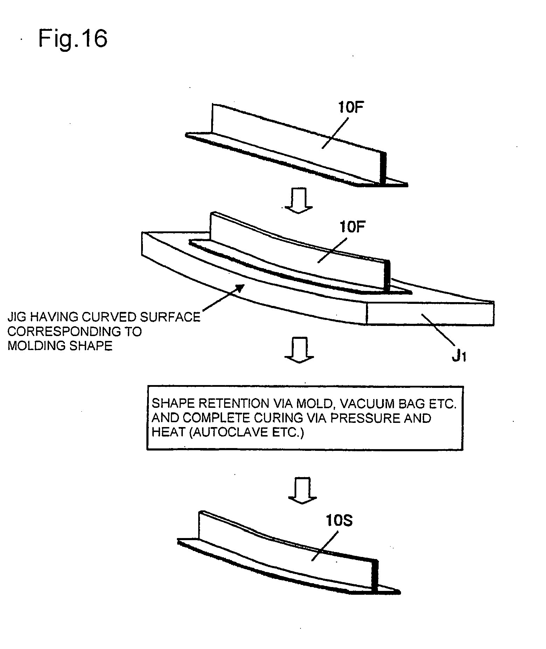

FIG. 16 illustrates the steps for mounting the uncured material 10F on a jig J₁ to deform the uncured material 10F to have a shape corresponding to the shape of the jig J₁ having a curved surface, storing and pressing the jig J₁ and the uncured material 10F in a vacuum pack or the like, heating the same in an autoclave or the like, and manufacturing the completely cured material 10S.

## Claims

1. A method for continuously preforming a prepreg composite material into a straight long product in an uncured state, the method comprising:
a step for sending out a prepreg material from a roll;
a step for laminating the prepreg material sent out from the roll and bending the same to have a predetermined cross-sectional shape;
a step for preforming the curved prepreg material in a mold having a heater; and
a traction step for pulling out the preformed prepreg material from the mold, wherein
the step for preforming the material in a mold is performed so that the thermosetting resin impregnated in the prepreg material does not gelate, the step being performed under a processing condition in which a temperature and a pressure are determined so that the prepreg material maintains its molded shape, and in a post-process, the preformed composite material is deformed into a three-dimensional shape corresponding to a counterpart member and completely cured to form a reinforcement member for the counterpart member.

2. The method for continuously preforming a composite material in an uncured state according to claim 1, wherein the prepreg material is sent intermittently to the mold.

3. The method for continuously preforming a composite material in an uncured state according to claim 1, wherein the prepreg material is sent continuously to the mold.
